# EUROPEAN PATENT SPECIFICATION

(11) **EP 4 070 940 B1**
(45) Date of publication and mention of the grant of the patent: **29.11.2023**
(21) Application number: 20919005.7
(22) Date of filing: 10.02.2020
(51) Int. Cl.: B29K 105/08, B29C 43/36, B29C 70/10, B29C 70/46, B29C 70/20, B29C 53/02, B29C 53/80, B29D 99/00, B29C 70/30, B29C 70/42, B29C 70/56, B29C 70/54, B29C 43/32

(54) **MOLDING JIG AND MOLDING METHOD**
FORMVORRICHTUNG UND FORMVERFAHREN
GABARIT DE MOULAGE ET PROCÉDÉ DE MOULAGE ASSOCIÉ

(43) Date of publication of application: 12.10.2022
(73) Proprietor: Mitsubishi Heavy Industries, Ltd., Tokyo 100-8332 (JP)
(72) Inventor: SHIMONO, Kodai, Tokyo 100-8332 (JP); TOKUTOMI, Hiroshi, Tokyo 100-8332 (JP)
(74) Representative: Hoffmann Eitle
(86) International application number: PCT/JP2020/005201
(87) International publication number: WO 2021/161401

(56) References cited:
- EP-A1- 2 704 887
- WO-A1-2017/007012
- DE-A1-102013 209 270
- DE-U1-202013 012 866
- US-A- 4 432 716
- US-A1- 2016 016 366

## Description

### Technical Field

The present disclosure relates to a forming jig and a forming method.

### Background Art

In the related art, a device for forming a composite material having an Q-shaped cross-section is known (refer to US 8 636 935 B2, for example). In the case of the device, a composite material that is a flat plate-shaped laminate is installed on a forming tool and the center of the composite material is pressed toward the forming tool by means of a pad in a state where both sides of the composite material are restricted so that forming is performed.

US 4 432 716 A discloses a forming jig for forming a laminate into a three-dimensional shape including curved portions and comprises a female die, a male die with a forming surface, a support member between the female die and the laminate at the time of forming. The support member is provided over a range including the female-side forming surface in the longitudinal direction.

DE 10 2013 209 270 A1 discloses a forming jig which represents the closest prior art.

### Summary of Invention

### Technical Problem

Meanwhile, as the forming of a laminate such as a composite material, there is a case of forming a laminate into a three-dimensional shape that extends in a longitudinal direction, of which the cross-section cut along a plane orthogonal to the longitudinal direction has an Q-like shape, and that has a bent portion in the longitudinal direction. In a case where a composite material is formed into a three-dimensional shape by using a forming jig in which a male die and a female die are used, the composite material on both sides of a bent portion to be formed in the longitudinal direction abuts the female die and the composite material at the bent portion to be formed abuts the male die when the composite material is installed on the female die. When the male die is pressed against the female die in this state, a portion of the composite material that abuts the female die enters a state of being restricted and a reinforced fiber included in the composite material is sent in surplus, which may cause a wrinkle and cause a forming failure.

Therefore, an object of the present disclosure is to provide a forming jig and a forming method with which it is possible to suppress occurrence of a forming failure even in a case of forming a laminate into a three-dimensional shape.

### Solution to Problem

This subject is solved by a forming jig with the features of claim 1 and a forming method with the features of claim 8. Preferred embodiments follow from the other claims.

According to an aspect of the present disclosure, there is provided a forming jig according to claim 1.

According to an aspect of the present disclosure, there is provided a forming method according to claim 8.

### Advantageous Effects of Invention

According to the aspects of the present disclosure, it is possible to suppress occurrence of a forming failure even in a case of forming a laminate into a three-dimensional shape.

### Brief Description of Drawings

Fig. 1 is a view schematically showing a laminate formed by means of a forming jig according to Embodiment 1.
Fig. 2 is a schematic side view of the forming jig according to Embodiment 1.
Fig. 3 is a schematic front view of the forming jig according to Embodiment 1.
Fig. 4 is a schematic plan view of a female die of the forming jig according to Embodiment 1.
Fig. 5 is a flowchart relating to a forming method in which the forming jig according to Embodiment 1 is used.
Fig. 6 is an explanatory view relating to the forming method in which the forming jig according to Embodiment 1 is used.
Fig. 7 is an explanatory view relating to a forming method in which a forming jig according to Embodiment 2 is used.

### Description of Embodiments

Hereinafter, an embodiment according to the present disclosure will be described in detail with reference to the drawings. Incidentally, the invention is not limited by the embodiment. In addition, the components in the following embodiment include components that can be easily replaced by those skilled in the art, or components that are substantially the same. Further, the components to be described below can be appropriately combined, and when there are a plurality of embodiments, the embodiments can be combined.

### [Embodiment 1]

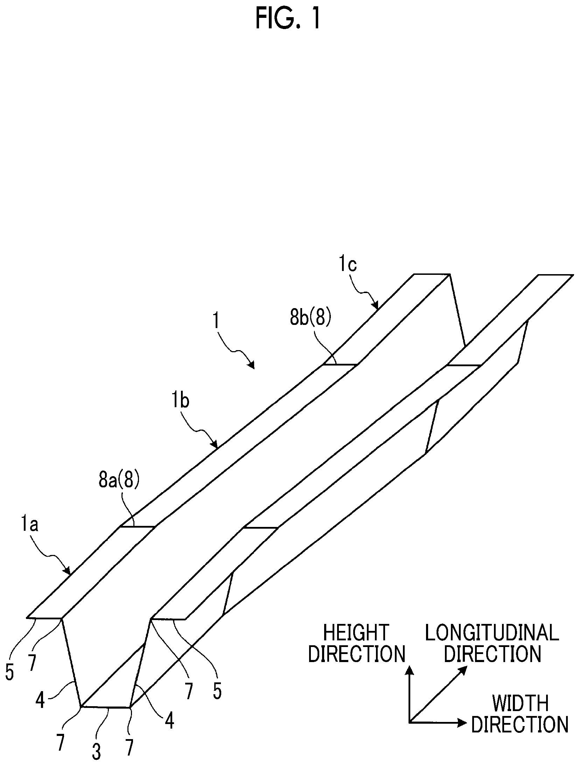

In the case of a forming jig and a forming method according to Embodiment 1, a flat plate-shaped laminate is bent and formed into a three-dimensional shape. First, with reference to Fig. 1, a laminate 1 that has a three-dimensional shape after forming will be described.

### (Laminate)

Fig. 1 is a view schematically showing a laminate formed by means of a forming jig according to Embodiment 1. As shown in Fig. 1, the laminate 1 is obtained by laminating a plurality of reinforced fiber sheets. The laminate 1 is formed to extend in a longitudinal direction (front-rear direction in Fig. 1). Note that, in Fig. 1, the longitudinal direction of the laminate 1 is a front-rear direction in Fig. 1, a width direction of the laminate 1 is a right-left direction in Fig. 1, and a height direction of the laminate 1 is a vertical direction in Fig. 1. The longitudinal direction, the width direction, and the height direction are directions orthogonal to each other.

The laminate 1 has a shape including at least one curved portion 7 in a cross-section cut along a plane orthogonal to the longitudinal direction. Specifically, the laminate 1 has an Ω-shaped cross-section with a bottom plate portion 3, two side plate portions 4, and two flange portions 5. The two side plate portions 4 of the laminate 1 are provided to extend along the height direction (vertical direction in Fig. 1) at both sides of the bottom plate portion 3 in the width direction (right-left direction in Fig. 1) with the curved portions 7 interposed therebetween. Therefore, the bottom plate portion 3 of the laminate 1 is provided under the two side plate portions 4. In addition, the two flange portions 5 of the laminate 1 are provided to extend outward in the width direction at upper sides of the two side plate portions 4 (sides opposite to bottom plate portion 3) with the curved portions 7 interposed therebetween.

In addition, the laminate 1 has a shape including at least one bent portion 8 in the longitudinal direction. Specifically, the laminate 1 includes two bent portions 8 in the longitudinal direction and includes a bent portion 8a protruding upward and a bent portion 8b protruding downward. The bent portion 8a protruding upward is formed on one side (front side in Fig. 1) in the longitudinal direction of the laminate 1 and the bent portion 8b protruding downward is formed on the other side (rear side in Fig. 1) in the longitudinal direction of the laminate 1. Accordingly, the shape of the laminate 1 changes in the longitudinal direction because of the two bent portions 8, a portion 1a on the one side in the longitudinal direction, a portion 1b on the central side in the longitudinal direction, and a portion 1c on the other side in the longitudinal direction. At this time, the portion 1a on the one side in the longitudinal direction and the portion 1c on the other side in the longitudinal direction are parallel with each other in the height direction and the portion 1b on the central side in the longitudinal direction is a portion that is inclined with respect to the portion 1a on the one side in the longitudinal direction and the portion 1c on the other side in the longitudinal direction. That is, in the height direction of the laminate 1, the portion 1a on the one side in the longitudinal direction is at a high position, the portion 1b on the central side in the longitudinal direction is downwardly inclined, and the portion 1c on the other side in the longitudinal direction is at a low position.

### (Forming Jig)

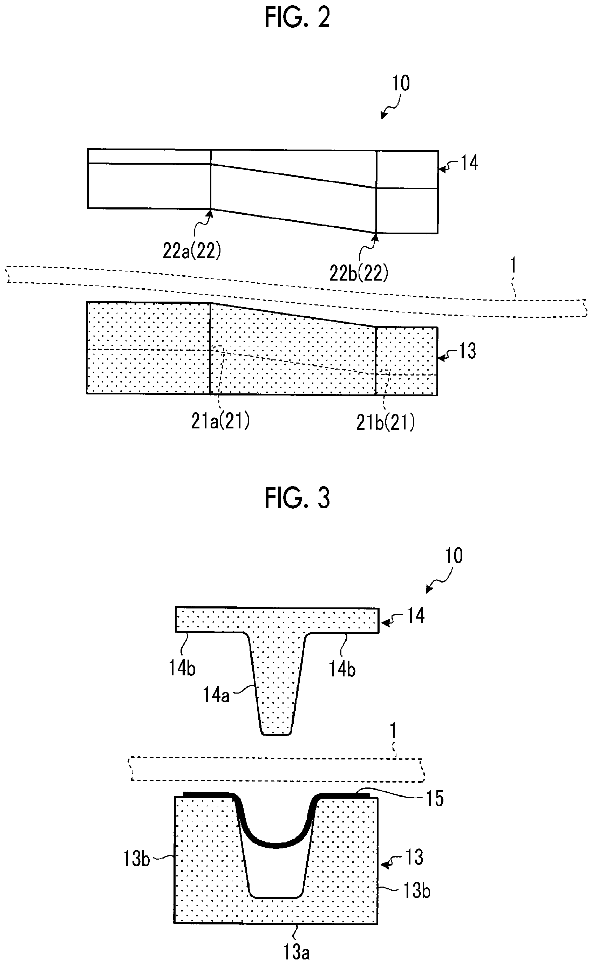

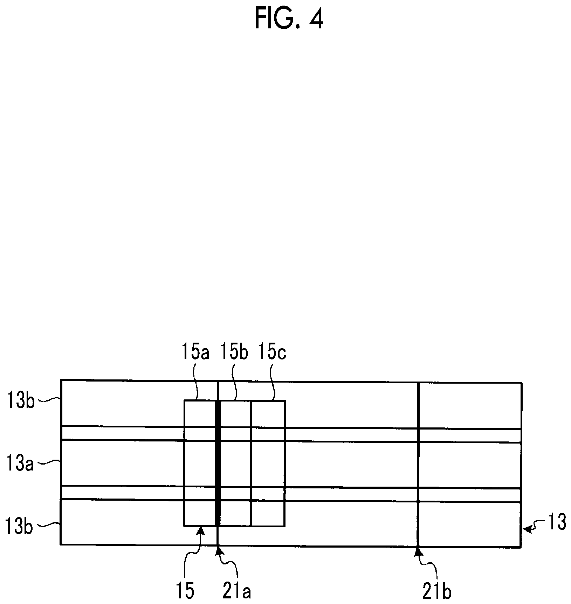

Next, a forming jig 10 for forming the laminate 1 of Fig. 1 will be described with reference to Figs. 2 to 4. Fig. 2 is a schematic side view of the forming jig according to Embodiment 1. Fig. 3 is a schematic front view of the forming jig according to Embodiment 1. Fig. 4 is a schematic plan view of a female die of the forming jig according to Embodiment 1.

As shown in Figs. 2 to 4, the forming jig 10 includes a female die 13, a male die 14, and a support member 15. The forming jig 10 forms the laminate 1 having a three-dimensional shape shown in Fig. 1 by sandwiching the laminate 1 having a flat plate-shape before forming between the female die 13 and the male die 14.

The female die 13 includes forming surfaces for forming lower surfaces of the laminate 1. That is, the forming surfaces of the female die 13 include female-side forming surfaces 21 for forming the bent portions 8 of the laminate 1. The female die 13 is formed into a recess-like shape (recessed shape) in a cross-section cut along a plane orthogonal to the longitudinal direction. Specifically, the female die 13 includes a bottom surface portion 13a and a pair of side surface portions 13b provided on both sides of the bottom surface portion 13a in the width direction. A forming surface on an inner side (upper side) of the bottom surface portion 13a forms an outer surface (lower surface) of the bottom plate portion 3 of the laminate 1. Forming surfaces on inner sides of the pair of side surface portions 13b form outer surfaces of the side plate portions 4 of the laminate 1 and forming surfaces on upper sides thereof form lower surfaces of the flange portions 5 of the laminate 1. In addition, the forming surfaces of the bottom surface portion 13a and the pair of side surface portions 13b of the female die 13 are forming surfaces (female-side forming surfaces 21) for bending the laminate 1 at the bent portions 8 in the longitudinal direction. That is, the female-side forming surfaces 21 for forming the bent portions 8 of the laminate 1 in the longitudinal direction include a female-side forming surface 21a at which a forming surface for forming the portion 1a on the one side in the longitudinal direction a forming surface for forming the portion 1b on the central side in the longitudinal direction intersect each other at a predetermined bending angle and a female-side forming surface 21b at which a forming surface for forming the portion 1b on the central side in the longitudinal direction and a forming surface for forming the portion 1c on the other side in the longitudinal direction intersect each other at a predetermined bending angle.

The male die 14 includes forming surfaces for forming upper surfaces of the laminate 1. That is, the forming surfaces of the male die 14 include male-side forming surfaces 22 for forming the bent portions 8 of the laminate 1. The male die 14 is fitted to the female die 13 with the laminate 1 interposed therebetween. The male die 14 is formed into a projection-like shape (protruding shape) in the cross-section cut along a plane orthogonal to the longitudinal direction. Specifically, the male die 14 includes a protrusion portion 14a and a pair of plate portions 14b provided on both sides of the protrusion portion 14a in the width direction. The protrusion portion 14a faces a recess formed by the bottom surface portion 13a and the pair of side surface portions 13b of the female die 13. Forming surfaces on outer sides (lower sides) of the protrusion portion 14a form an inner surface (upper surface) of the bottom plate portion 3 of the laminate 1 and inner surfaces of the pair of side plate portions 4. Forming surfaces on lower sides of the pair of plate portions 14b form upper surface of the flange portions 5 of the laminate 1. In addition, the forming surfaces of the protrusion portion 14a and the pair of plate portions 14b of the male die 14 are forming surfaces (male-side forming surfaces 22) for bending the laminate 1 at the bent portions 8 in the longitudinal direction. That is, the male-side forming surfaces 22 for forming the bent portions 8 of the laminate 1 in the longitudinal direction include a male-side forming surface 22a at which a forming surface for forming the portion 1a on the one side in the longitudinal direction a forming surface for forming the portion 1b on the central side in the longitudinal direction intersect each other at a predetermined bending angle and a male-side forming surface 22b at which a forming surface for forming the portion 1b on the central side in the longitudinal direction and a forming surface for forming the portion 1c on the other side in the longitudinal direction intersect each other at a predetermined bending angle.

Note that the bending angles at the female-side forming surface 21a and the male-side forming surface 22a are angles for a steep at the time of formation of a composite material and are angles steeper than an angle of "1:100" at which a length in the longitudinal direction becomes 100 when a length in the height direction changes by 1. Specifically, the bending angles at the female-side forming surface 21a and the male-side forming surface 22a are "1:40".

The support member 15 is a member having extensibility, and in Embodiment 1, a thermoplastic film is used. In addition, the support member 15 has a thickness smaller than that of a reinforced fiber sheet constituting the laminate 1. The extension ratio of the support member 15 transitioning from a normal state to an extended state is within a range of 1.5 to 4. As shown in Fig. 3, the support member 15 is disposed to be suspended between the two side surface portions 13b of the female die 13, and a portion of the support member 15 that faces the bottom surface portion 13a of the female die 13 hangs down from upper surfaces of the two side surface portions 13b and is provided at a position separated from the bottom surface portion 13a of the female die 13. In addition, both end sides of the support member 15 in the width direction are fixed to the side surface portions 13b by means of adhesion or the like.

In addition, as shown in Fig. 4, the support member 15 is provided within a range including the female-side forming surface 21a for forming the bent portion 8a of the laminate 1. Specifically, the support member 15 is positioned closer to the female-side forming surface 21a than the center of a space between an end portion of the portion 1a on the one side in the longitudinal direction of the laminate 1 and the female-side forming surface 21a, and the support member 15 is provided in a range positioned closer to the female-side forming surface 21a than the center of a space between the female-side forming surface 21a and the female-side forming surface 21b.

The support member 15 includes a plurality of support member segments 15a, 15b, and 15c into which the support member 15 is divided in the longitudinal direction. In Embodiment 1, for example, three support member segments 15a, 15b, and 15c are used. Regarding the three support member segments 15a and 15b, the support member segment 15a is provided on the one side (portion 1a side) in the longitudinal direction and the support member segment 15b is provided on the other side (portion 1b) in the longitudinal direction with the female-side forming surface 21a interposed therebetween. In addition, the support member segment 15c is provided closer to the other side (portion 1b) in the longitudinal direction than the support member segment 15b. In this manner, a range in which the support member 15 is provided on the portion 1b side is smaller than a range in which the support member 15 is provided on the portion 1a side.

The above-described support member 15 supports the laminate 1 in a state of being separated from the bottom surface portion 13a of the female die 13. That is, the support member 15 is provided between the female die 13 and the laminate 1 at the time of forming. When the male die 14 is pressed against the laminate 1 in this state, the support member 15 generates a force that relatively presses the laminate 1 to the male die 14. Here, the plurality of support member segments 15a, 15b, and 15c are different in force that relatively presses the laminate 1 to the male die 14 and the force becomes smaller away from the bent portion 8a (female-side forming surface 21a) in the longitudinal direction. Note that the force pressing the laminate is adjusted by means of the tension of the support member 15, and the tension of the support member segment 15a and the tension of the support member segment 15b are the same as each other and are larger than the tension of the support member segment 15c (larger tensile force is applied thereto). Note that the force pressing the laminate may be adjusted by means of the thickness of the support member 15. In this case, the thickness of the support member segment 15a and the thickness of the support member segment 15b are the same as each other and are larger than the thickness of the support member segment 15c.

Since the support member 15 has extensibility as described above, when the male die 14 is pressed toward the female die 13 in a state where the laminate 1 is supported, the support member 15 is extended by being pressed. Therefore, the laminate 1 is pressed into the female die 13 while being pressed against the male die 14 by the support member 15 at the bent portion 8a. In addition, after the laminate 1 is formed, the support member 15 is extended into a shape conforming to the forming surfaces of the female die 13.

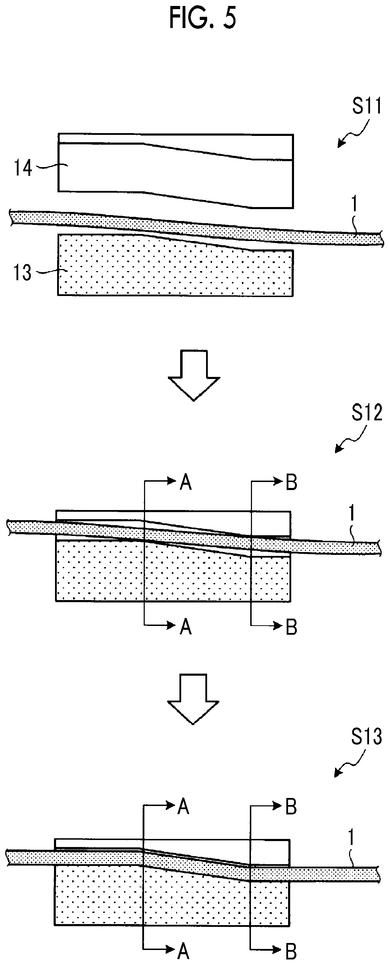

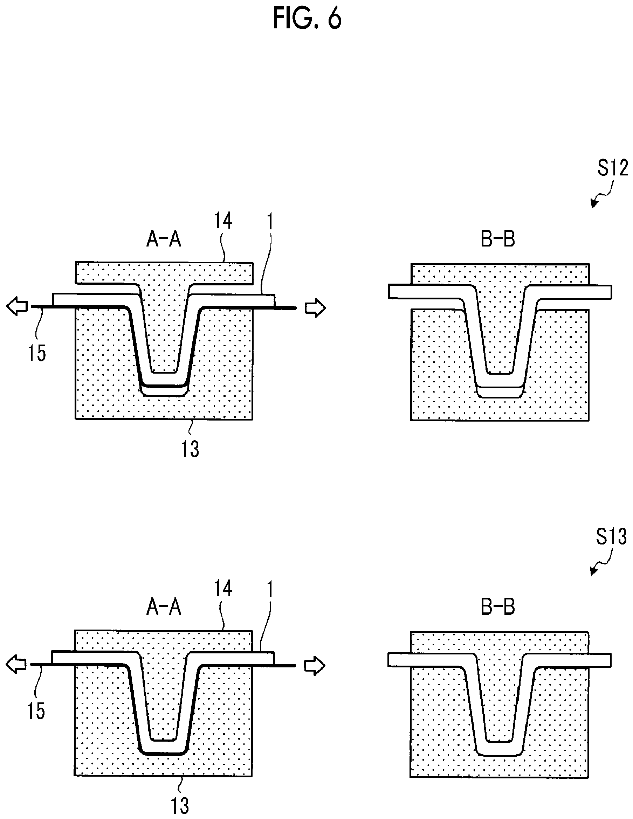

Next, a forming method in which the above-described forming jig 10 is used will be described with reference to Figs. 5 and 6. Fig. 5 is a flowchart relating to a forming method in which the forming jig according to Embodiment 1 is used. Fig. 6 is an explanatory view relating to the forming method in which the forming jig according to Embodiment 1 is used.

As shown in Fig. 5, first, the laminate 1 is installed on the female die 13 (step S11). In step S11, the laminate 1 is installed on the female die 13 such that the laminate 1 is supported by the support member 15 provided on the female-side forming surface 21a. Next, the male die 14 facing the female die 13 is pressed toward the female die 13 in the height direction so that the laminate 1 is sandwiched between the female die 13 and the male die 14, and the laminate 1 is formed into a three-dimensional shape including the bent portions 8 (step S12 and step S13) .

Step S12 shows the laminate 1 during the forming, a cross-section at the bent portion 8a that is orthogonal to the longitudinal direction is a cross-section A-A, and a cross-section at the bent portion 8b that is orthogonal to the longitudinal direction is a cross-section B-B. As shown in Fig. 6, in the cross-section A-A in step S12, a tension is applied to the support member 15 and the laminate 1 is pressed toward the male die 14 since the support member 15 is pressed in a state where the laminate 1 is supported by the support member 15. In the cross-section B-B in step S12, as shown in Fig. 5, the male-side forming surface 22b of the male die 14 abuts the laminate 1 although the support member 15 is not provided. In this manner, in step S12, when the laminate 1 is formed, the laminate 1 abuts the male die 14 on both sides of the bent portion 8a to be formed in the longitudinal direction and the bent portion 8a is supported by the support member 15 in this state.

Step S13 shows the laminate 1 after the forming. As shown in Fig. 6, in the cross-section A-A in step S13, the male die 14 is fitted to the female die 13 with the laminate 1 interposed therebetween. At this time, the support member 15 is in an extended state. Similarly, in the cross-section B-B in step S13, the male die 14 is fitted to the female die 13 with the laminate 1 interposed therebetween. In this manner, the laminate 1 is formed into a three-dimensional shape by the forming surfaces of the female die 13 and the male die 14.

Note that, in Embodiment 1, a thermoplastic film having extensibility is used as the support member 15 but there is no particular limitation. The support member 15 may be a member having elasticity, that is, both of extensibility and contractibility, and for example, rubber as an elastic member may be applied thereto. Specifically, the elastic member is sheet-shaped heat-resistant rubber, that is, a heat-resistant rubber sheet. Note that, the heat-resistant rubber is rubber having heat resistance higher than that of natural rubber, and is, for example, silicone rubber or the like.

In addition, in Embodiment 1, after the forming, the support member 15 in an extended state abuts the forming surfaces of the female die 13. However, a groove allowing a portion that the support member 15 abuts may be formed at the forming surfaces of the female die 13.

### [Embodiment 2]

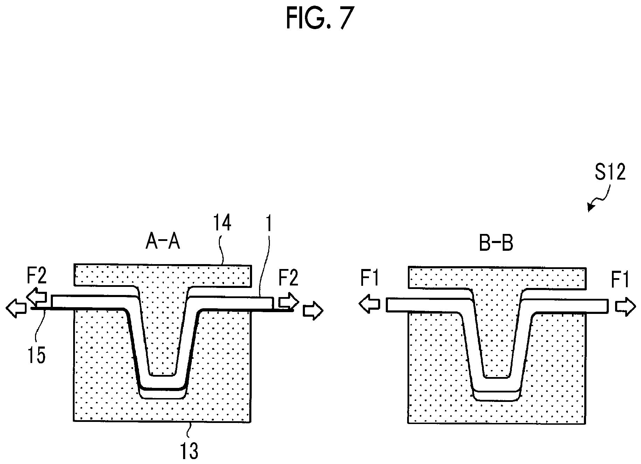

Next, a forming method in which the forming jig 10 according to Embodiment 2 is used will be described with reference to Fig. 7. Note that, a difference between Embodiment 1 and Embodiment 2 will be described in Embodiment 2 to avoid repetitive description and the same components as those in Embodiment 1 will be given the same reference numerals. Fig. 7 is an explanatory view relating to a forming method in which a forming jig according to Embodiment 2 is used.

In addition to the forming jig 10 according to Embodiment 1, the forming jig 10 according to Embodiment 2 further includes a tensile force applying unit that applies, to the laminate 1, a tensile force that pulls both sides of the laminate 1 in the width direction outward. As shown in Fig. 7, the tensile force applying unit is provided at least in a range where the support member 15 is provided. That is, the tensile force applying unit may apply a tensile force that pulls both sides of the laminate 1 in the width direction outward over the entire length in the longitudinal direction.

In the forming method, the tensile force applying unit applies a tensile force to the laminate 1 while the laminate 1 is being formed in step S12. Specifically, in step S12, a tensile force is applied to the laminate 1 such that the result of comparison between a tensile force F2 applied to the bent portion 8a of the laminate 1 shown in the cross-section A-A and a tensile force F1 applied to the bent portion 8b of the laminate 1 shown in the cross-section B-B becomes "F2 > F1".

As described above, the forming jig 10 and the forming method according to Embodiment 1 and Embodiment 2 are understood as follows, for example.

According to a first aspect, there is provided the forming jig 10 forming the laminate 1 into a three-dimensional shape that extends in the longitudinal direction, that has the cross-sectional shape including the curved portions 7 in a cross-section cut along a plane orthogonal to the longitudinal direction, and that includes the bent portion 8 in the longitudinal direction, the laminate 1 being obtained by laminating reinforced fiber sheets. The forming jig 10 includes the female die 13 that includes the female-side forming surface 21 for forming the bent portion 8, the male die 14 that is fitted to the female die 13 with the laminate 1 interposed therebetween and that includes the male-side forming surface 22 for forming the bent portion 8, and the support member 15 having extensibility that is provided between the female die 13 and the laminate 1 at a time of forming and that supports the laminate 1 in a state where the laminate 1 is separated from the female die 13. The laminate 1 abuts the male die 14 on both sides of the bent portion 8 to be formed in the longitudinal direction at the time of the forming, and the support member 15 is provided over a range including the female-side forming surface 21 in the longitudinal direction.

According to such a configuration, the laminate 1 can be separated from the female-side forming surface 21a of the female die 13 by means of the support member 15 even in a case where the male die 14 is pressed against the female die 13 in a state where both sides of the laminate 1 in the longitudinal direction with the bent portion 8a interposed therebetween abuts the male die 14. Therefore, the laminate 1 can be restrained from being restricted by the female die 13 at the bent portion 8a and thus surplus reinforced fiber sheets can be allowed even when the reinforced fiber sheets are sent toward between the female die 13 and the male die 14 in surplus due to the forming. Accordingly, even in a case of forming the laminate into a three-dimensional shape, it is possible to suppress generation of a wrinkle on the laminate 1 and to suppress occurrence of a forming failure.

According to a second aspect, the cross-section of the laminate 1 has an Ω-shape including the bottom plate portion 3, two side plate portions 4 that are provided on both sides of the bottom plate portion 3 with the curved portions 7 interposed therebetween, and two flange portions 5 that are provided on sides of the two side plate portions 4 opposite to the bottom plate portion 3 with the curved portions 7 interposed therebetween.

According to such a configuration, it is possible to form the laminate 1 into a three-dimensional shape of which the cross-section has an Ω-shape.

According to a third aspect, the support member 15 is a thermoplastic film or a heat-resistant rubber sheet.

According to such a configuration, it is possible to use a thermoplastic film or a heat-resistant rubber sheet which is a material appropriate for the support member 15 having extensibility and it is possible to suitably support the laminate 1.

According to a fourth aspect, the support member 15 is thinner than the reinforced fiber sheets.

According to this configuration, the trace of the support member 15 removed from the laminate 1 after the forming can be made unnoticeable.

According to a fifth aspect, the extension ratio of the support member 15 transitioning from a normal state to an extended state is within a range of 1.5 to 4.

According to such a configuration, the support member 15 can be suitably extended.

According to a sixth aspect, a tensile force applying unit that is provided in a range where the support member 15 is provided and that applies, to the laminate 1, a tensile force that pulls both sides of the laminate 1 outward in the cross-section is further provided.

According to such a configuration, it is possible to further relatively press the laminate 1 against the male die 14 by applying a tensile force to the bent portion 8a of the laminate 1. In addition, it is possible to restrain the reinforced fiber sheets from being sent toward between the female die 13 and the male die 14 in surplus at the time of the forming. Therefore, it is possible to further suppress generation of a wrinkle on the laminate 1 and to suppress occurrence of a forming failure.

According to a seventh aspect, the support member 15 includes the plurality of support member segments 15a, 15b, and 15c into which the support member 15 is divided in the longitudinal direction.

According to such a configuration, it is possible to appropriately support the laminate 1 with the plurality of support member segments 15a, 15b, and 15c.

According to an eighth aspect, a force by which the support member 15 that relatively presses the laminate 1 to the male die 14 becomes smaller away from the bent portion 8 in the longitudinal direction.

According to such a configuration, since a force by which the laminate 1 is pressed to the male die can be made smaller away from the bent portion 8a, a pressing force around the bent portion 8a can be made appropriate.

According to a ninth aspect, there is provided a forming method of forming the laminate 1 into a three-dimensional shape that extends in the longitudinal direction, that has the cross-sectional shape including the curved portions 7 in a cross-section cut along a plane orthogonal to the longitudinal direction, and that includes the bent portion 8 in the longitudinal direction by using the above-described forming jig 10, the laminate 1 being obtained by laminating reinforced fiber sheets. The forming method includes a step of installing the laminate 1 on the female die 13 such that the laminate 1 is supported by the support member 15 provided on the female-side forming surface 21 and a step of forming the laminate 1 into the three-dimensional shape including the bent portion 8 by sandwiching the laminate 1 between the male die 14 and the female die 13.

According to such a configuration, the laminate 1 can be separated from the female-side forming surface 21a of the female die 13 by means of the support member 15 even in a case where the male die 14 is pressed against the female die 13 in a state where both sides of the laminate 1 in the longitudinal direction with the bent portion 8a interposed therebetween abuts the male die 14. Therefore, the laminate 1 can be restrained from being restricted by the female die 13 at the bent portion 8a and thus surplus reinforced fiber sheets can be allowed even when the reinforced fiber sheets are sent toward between the female die 13 and the male die 14 in surplus due to the forming. Accordingly, even in a case of forming the laminate into a three-dimensional shape, it is possible to suppress generation of a wrinkle on the laminate 1 and to suppress occurrence of a forming failure.

### Reference Signs List

- 1:: Laminate
- 3:: Bottom plate portion
- 4:: Side plate portion
- 5:: Flange portion
- 7:: Curved portion
- 8:: Bent portion
- 10:: Forming jig
- 13:: Female die
- 14:: Male die
- 15:: Support member
- 21:: Female-side forming surface
- 22:: Male-side forming surface

## Claims

1. A forming jig (10) forming a laminate (1) into a three-dimensional shape that extends in a longitudinal direction, that has a cross-sectional shape including curved portions (7) in a cross-section cut along a plane orthogonal to the longitudinal direction, and that includes a bent portion (8) in the longitudinal direction, the laminate (1) being obtained by laminating reinforced fiber sheets, the forming jig (10) comprising:
a female die (13) that includes a female-side forming surface (21) for forming the bent portion (8);
a male die (14) that is fitted to the female die (13) with the laminate (1) interposed therebetween and that includes a male-side forming surface (22) for forming the bent portion (8); and
a support member (15) having extensibility that is provided between the female die (13) and the laminate (1) at a time of forming and that supports the laminate (1) in a state where the laminate (1) is separated from the female die (13),
wherein the laminate (1) abuts the male die (14) on both sides of the bent portion (8) to be formed in the longitudinal direction at the time of the forming,
the support member (15) is provided over a range including the female-side forming surface (21) in the longitudinal direction,
**characterized in that**
the support member (15) includes a plurality of support member segments (15a, 15b, 15c) into which the support member (15) is divided in the longitudinal direction.

2. The forming jig (10) according to claim 1,
wherein the cross-section of the laminate (1) has an Q-shape including a bottom plate portion (3), two side plate portions (4) that are provided on both sides of the bottom plate portion (3) with the curved portions (7) interposed therebetween, and two flange portions (5) that are provided on sides of the two side plate portions (4) opposite to the bottom plate portion (3) with the curved portions (7) interposed therebetween.

3. The forming jig (10) according to claim 1,
wherein the support member (15) is a thermoplastic film or a heat-resistant rubber sheet.

4. The forming jig (10) according to claim 1,
wherein the support member (15) is thinner than the reinforced fiber sheets.

5. The forming jig (10) according to claim 1,
wherein an extension ratio of the support member (15) transitioning from a normal state to an extended state is within a range of 1.5 to 4.

6. The forming jig (10) according to claim 1, further comprising:
a tensile force applying unit that is provided in a range where the support member (15) is provided and that applies, to the laminate (1), a tensile force (F1, F2) that pulls both sides of the laminate (1) outward in the cross-section.

7. The forming jig (10) according to claim 1,
wherein a force by which the support member (15) that relatively presses the laminate (1) to the male die (14) becomes smaller away from the bent portion (8) in the longitudinal direction.

8. A forming method of forming a laminate (1) into a three-dimensional shape that extends in a longitudinal direction, that has a cross-sectional shape including curved portions (7) in a cross-section cut along a plane orthogonal to the longitudinal direction, and that includes a bent portion (8) in the longitudinal direction by using the forming jig (10) according to any one of claims 1 to 7, the laminate (1) being obtained by laminating reinforced fiber sheets, the forming method comprising:
a step of installing the laminate (1) on the female die (13) such that the laminate (1) is supported by the support member (15) provided on the female-side forming surface (21); and
a step of forming the laminate (1) into the three-dimensional shape including the bent portion (8) by sandwiching the laminate (1) between the male die (14) and the female die (13).

## Patentansprüche

1. Formeinspannvorrichtung (10), die ein Laminat (1) in eine dreidimensionale Gestalt formt, die sich in einer Längsrichtung erstreckt, die eine Querschnittsgestalt aufweist, die gekrümmte Abschnitte (7) in einem Querschnitt einschließt, der entlang einer Ebene orthogonal zu der Längsrichtung geschnitten ist, und die einen gebogenen Abschnitt (8) in der Längsrichtung einschließt, wobei das Laminat (1) durch Laminieren von verstärkten Faserplatten erhalten wird, wobei die Formeinspannvorrichtung (10) Folgendes umfasst:
eine weibliche Matrize (13), die eine Formfläche (21) der weiblichen Seite zum Formen des gebogenen Abschnitts (8) einschließt;
eine männliche Matrize (14), die an die weibliche Matrize (13) angepasst ist, wobei das Laminat (1) dazwischen angeordnet ist, und die eine Formfläche (22) der männlichen Seite zum Formen des gebogenen Abschnitts (8) einschließt; und
ein Stützelement (15), das Dehnbarkeit aufweist, das zwischen der weiblichen Matrize (13) und dem Laminat (1) zum Zeitpunkt des Formens bereitgestellt wird und das das Laminat (1) in einem Zustand stützt, in dem das Laminat (1) von der weiblichen Matrize (13) getrennt ist,
wobei das Laminat (1) zum Zeitpunkt des Formens auf beiden Seiten des zu formenden gebogenen Abschnitts (8) in Längsrichtung an der männlichen Matrize (14) anliegt,
wobei das Stützelement (15) über einen Bereich einschließlich der Formfläche (21) der weiblichen Seite in der Längsrichtung bereitgestellt ist,
**dadurch gekennzeichnet, dass**
das Stützelement (15) eine Vielzahl von Stützelementsegmenten (15a, 15b, 15c) einschließt, in die das Stützelement (15) in der Längsrichtung unterteilt ist.

2. Formeinspannvorrichtung (10) nach Anspruch 1,
wobei der Querschnitt des Laminats (1) eine Ω-Form aufweist, die einen Bodenplattenabschnitt (3), zwei Seitenplattenabschnitte (4), die auf beiden Seiten des Bodenplattenabschnitts (3) mit den dazwischen angeordneten gekrümmten Abschnitten (7) bereitgestellt sind, und zwei Flanschabschnitte (5), die auf den dem Bodenplattenabschnitt (3) gegenüberliegenden Seiten der beiden Seitenplattenabschnitte (4) mit den dazwischen angeordneten gekrümmten Abschnitten (7) bereitgestellt sind, einschließt.

3. Formeinspannvorrichtung (10) nach Anspruch 1,
wobei das Stützelement (15) eine thermoplastische Folie oder eine hitzebeständige Gummiplatte ist.

4. Formeinspannvorrichtung (10) nach Anspruch 1,
wobei das Stützelement (15) dünner ist als die verstärkten Faserplatten.

5. Formeinspannvorrichtung (10) nach Anspruch 1,
wobei ein Ausdehnungsverhältnis des Stützelements (15) beim Übergang von einem normalen Zustand in einen ausgedehnten Zustand innerhalb eines Bereichs von 1,5 bis 4 liegt.

6. Formeinspannvorrichtung (10) nach Anspruch 1, weiter umfassend:
eine Einheit zum Aufbringen einer Zugkraft, die in einem Bereich bereitgestellt ist, in dem das Stützelement (15) bereitgestellt ist, und die auf das Laminat (1) eine Zugkraft (F1, F2) aufbringt, die beide Seiten des Laminats (1) im Querschnitt nach außen zieht.

7. Formeinspannvorrichtung (10) nach Anspruch 1,
wobei eine Kraft, durch die das Stützelement (15), das das Laminat (1) relativ zur männlichen Matrize (14) presst, in der Längsrichtung vom gebogenen Abschnitt (8) weg kleiner wird.

8. Formverfahren zum Formen eines Laminats (1) in eine dreidimensionale Form, die sich in einer Längsrichtung erstreckt, die eine Querschnittsgestalt aufweist, die gekrümmte Abschnitte (7) in einem Querschnitt einschließt, der entlang einer Ebene orthogonal zur Längsrichtung geschnitten ist, und die einen gebogenen Abschnitt (8) in der Längsrichtung einschließt, unter Verwendung der Formeinspannvorrichtung (10) nach einem der Ansprüche 1 bis 7, wobei das Laminat (1) durch Laminieren von verstärkten Faserplatten erhalten wird, wobei das Formverfahren Folgendes umfasst:
einen Schritt des Anbringens des Laminats (1) auf der weiblichen Matrize (13), so dass das Laminat (1) durch das auf der Formfläche (21) der weiblichen Seite bereitgestellte Stützelement (15) gestützt wird; und
einen Schritt des Formens des Laminats (1) in die dreidimensionale Form, die den gebogenen Abschnitt (8) einschließt, indem das Laminat (1) sandwichartig zwischen der männlichen Matrize (14) und der weiblichen Matrize (13) angeordnet wird.

## Revendications

1. Gabarit de moulage (10) pour mouler un stratifié (1) dans une forme tridimensionnelle qui s'étend dans une direction longitudinale, qui présente une forme en section transversale incluant des parties incurvées (7) dans une section transversale coupée le long d'un plan orthogonal à la direction longitudinale, et qui inclut une partie courbée (8) dans la direction longitudinale, le stratifié (1) étant obtenu par stratification de feuilles de fibres renforcées, le gabarit de moulage (10) comprenant :
une matrice femelle (13) qui inclut une surface de moulage côté femelle (21) pour mouler la partie courbée (8) ;
une matrice mâle (14) qui est installée sur la matrice femelle (13) avec le stratifié (1) intercalé entre celles-ci et qui inclut une surface de moulage côté mâle (22) pour mouler la partie courbée (8) ; et
un élément de support (15) présentant une extensibilité qui est prévu entre la matrice femelle (13) et le stratifié (1) au moment du moulage et qui supporte le stratifié (1) dans un état où le stratifié (1) est séparé de la matrice femelle (13),
dans lequel le stratifié (1) jouxte la matrice mâle (14) des deux côtés de la partie courbée (8) à mouler dans la direction longitudinale au moment du moulage,
l'élément de support (15) est prévu sur une plage incluant la surface de moulage côté femelle (21) dans la direction longitudinale,
**caractérisé en ce que**
l'élément de support (15) inclut une pluralité de segments d'élément de support (15a, 15b, 15c) dans lesquels l'élément de support (15) est divisé dans la direction longitudinale.

2. Gabarit de moulage (10) selon la revendication 1,
dans lequel la section transversale du stratifié (1) présente une forme Ω incluant une partie de plaque inférieure (3), deux parties de plaque latérale (4) qui sont prévues des deux côtés de la partie de plaque inférieure (3) avec les parties incurvées (7) intercalées entre celles-ci, et deux parties de bride (5) qui sont prévues des côtés des deux parties de plaque latérale (4) opposées à la partie de plaque inférieure (3) avec les parties incurvées (7) intercalées entre celles-ci.

3. Gabarit de moulage (10) selon la revendication 1,
dans lequel l'élément de support (15) est un film thermoplastique ou une feuille de caoutchouc résistant à la chaleur.

4. Gabarit de moulage (10) selon la revendication 1,
dans lequel l'élément de support (15) est plus mince que les feuilles de fibres renforcées.

5. Gabarit de moulage (10) selon la revendication 1,
dans lequel un rapport d'extension de l'élément de support (15) passant d'un état normal à un état étendu est compris dans une plage de 1,5 à 4.

6. Gabarit de moulage (10) selon la revendication 1, comprenant en outre :
une unité d'application de force de traction qui est prévue dans une plage où l'élément de support (15) est prévu et qui applique, au stratifié (1), une force de traction (F1, F2) qui tire les deux côtés du stratifié (1) vers l'extérieur dans la section transversale.

7. Gabarit de moulage (10) selon la revendication 1,
dans lequel une force par laquelle l'élément de support (15) qui presse relativement le stratifié (1) sur la matrice mâle (14) devient plus faible à distance de la partie courbée (8) dans la direction longitudinale.

8. Procédé de moulage pour mouler un stratifié (1) dans une forme tridimensionnelle qui s'étend dans une direction longitudinale, qui présente une forme en section transversale incluant des parties incurvées (7) dans une section transversale coupée le long d'un plan orthogonal à la direction longitudinale, et qui inclut une partie courbée (8) dans la direction longitudinale en utilisant le gabarit de moulage (10) selon l'une quelconque des revendications 1 à 7, le stratifié (1) étant obtenu par stratification de feuilles de fibres renforcées, le procédé de moulage comprenant :
une étape d'installation du stratifié (1) sur la matrice femelle (13) de telle sorte que le stratifié (1) soit supporté par l'élément de support (15) prévu sur la surface de moulage côté femelle (21) ; et
une étape de moulage du stratifié (1) dans la forme tridimensionnelle incluant la partie courbée (8) en prenant en sandwich le stratifié (1) entre la matrice mâle (14) et la matrice femelle (13).
